# EUROPEAN PATENT APPLICATION

(11) **EP 4 718 949 A1**
(43) Date of publication of application: **01.04.2026**
(21) Application number: 25194597.8
(22) Date of filing: 07.08.2025
(51) Int. Cl.: H05B 47/17, F21V 23/00, F21V 23/06, F21S 9/02, F21Y 115/10

(54) **LED LAMP**

(30) Priority: 26.09.2024 CN 202411348548
(71) Applicant: Ningbo Sanity Lighting Electrical Appliance Co., Ltd., Cixi Zhejiang 315331 (CN)
(72) Inventor: GONG, Feilong, Ningbo City, 315331 (CN)
(74) Representative: Pons IP

(57) **Abstract**

The LED lamp comprises a light source, a driving module to drive the light source, a power supply module electrically connected to the driving module to supply power, a connector, and an emergency module. The driving module has a first plug-in terminal connected to the light source; the connector has a second, the emergency module a third. The two can alternate to put the lamp in two states: one, the connector's second terminal engages the driving module's first, enabling conduction between them and the light source; the other, the emergency module's third terminal engages the first, enabling conduction with the light source to drive it.

## Description

### Technical Field of the Invention

The present invention relates to a field of lamps, and in particular to an LED Lamp.

### Background of the Invention

By the existing technology, LED lamps are generally powered by alternating current (short as 'AC',same for all below) , so the LED lamps cannot be used once the AC power is cut off. However, with the users' increasing demand for LED lamps, it is required that LED lamps can be used even after the AC power is cut off, thus increasing the application scenarios of LED lamps.

To solve the above technical problem, a Chinese Utility Model CN220108286U (patent No.: ZL202321524986.3) disclosed an LED lamp with an emergency lighting function, wherein the LED lamp comprises an AC power input switch, an LED driving power supply, a main lighting LED lamp, an AC power detection circuit, a switch state detection circuit, a standby power supply module, an emergency lighting lamp and a main control module; an input terminal of the main lighting lamp is connected to an output terminal of the LED driving power supply; a detection terminal of the AC power detection circuit is connected to a secondary stage of a AC power distribution transformer, and a feedback terminal of the AC power detection circuit is connected to the main control module; a detection terminal of the switch state detection circuit is connected to a terminal of the AC power input switch that is connected to the LED driving power supply, and a standby terminal of the switch state detection circuit is connected to the main control module; the standby power supply module is connected to the emergency lighting lamp and the main control module; and, a control terminal of the emergency lighting lamp is connected to the main control module.

Although this LED lamp can effectively avoid the problem that the LED lamp cannot provide the lighting function normally when the AC power is cut off, this lamp has the following limitations: on one hand, this lamp comprises two LED lamps, they are the main lighting lamp and the emergency lighting lamp. The emergency lighting lamp is powered by the standby power supply, and the emergency lighting lamp in the LED lamp is only used in case of emergency, so the utilization is low under normal circumstances, resulting in the waste of resources. On the other hand, even if this LED lamp only comprises the main lighting lamp which is powered by the standby power supply, in this case, the standby power supply needs to be connected to the main lighting lamp through a lead, so that it is difficult to disassemble or assemble the lamp in a time-consuming and labor consuming manner. Therefore, further improvements are needed for LED lamps with the existing technology.

### SUMMARY

A technical problem to be solved by the present invention is to provide an LED lamp which is easy to assemble or disassemble and enables a continuous operation of a light source even after the AC power is cut off.

For solving the above technical problem, the LED lamp comprises a light source having an anode and a cathode; a driving module for driving the light source to operate; a power supply module being electrically connected to the driving module for supplying power to the driving module; characterized in that: the LED lamp further comprises a connector, an emergency module; the driving module has a first plug-in terminal which is electrically connected to the light source, the connector has a second plug-in terminal, and the emergency module has a third plug-in terminal; the connector and the emergency module are capable of being operated alternatively so as to make the LED lamp to have the following two operation states:

in a first operation state, the second plug-in terminal of the connector is engaged with the first plug-in terminal of the driving module, the connector enables an electrical conduction between the driving module and the light source;

in a second operation state, the third plug-in terminal of the emergency module is engaged with the first plug-in terminal of the driving module, the emergency module enables an electrical conduction with the light source so as to drive the light source to operate.

To improve the engagement firmness, preferably, the second plug-in terminal is capable of being buckled with the first plug-in terminal, and third plug-in terminal is capable of being buckled with the first plug-in terminal.

To facilitate the disassembly or assembly of the driving module and the emergency module, preferably, the LED lamp further comprises a lamp holder, the driving module and the emergency module are detachably disposed on the lamp holder.

To enable the LED lamp realize arbitrary switching between two operation states so as to improve the assembly efficiency, preferably, the driving module has a power output anode and a power output cathode, the power supply module comprises a neutral wire, a first live wire and a second live wire; the first plug-in terminal comprises eight ports, they are a first port, a second port, a third port, a fourth port, a fifth port, a sixth port, a seventh port and an eighth port, the first port is connected to the anode of the light source, the second port is connected to the cathode of the light source, the third port is connected to the power output anode of the driving module, the fourth port is connected to the power output cathode of the driving module, the fifth port is connected to the neutral wire of the power supply module, the sixth port is connected to an input terminal of the driving module, the seventh port is connected to the first live wire of the power supply module, the eighth port is connected to the second live wire.

Preferably, in the first operation state, the connector is capable of connecting the first port to the third port, connecting the second port to the fourth port, and connecting the sixth port to the eighth port.

Preferably, the emergency module comprises a battery, a charging circuit, a constant voltage circuit, and an emergency conversion circuit; in the second operation state, an input terminal of the constant voltage circuit is respectively electrically connected to the fifth port and the seventh port, an output terminal of the constant voltage circuit is electrically connected to an input terminal of the charging circuit, and an output terminal of the charging circuit is electrically connected to the battery, and, the battery is electrically connected to an input terminal of the emergency conversion circuit.

To enable an electrical conduction between the emergency module and the light source, preferably, the emergency module further comprises a power supply circuit and a switch module, an input terminal of the power supply circuit is electrically connected to the battery and the output terminal of the constant voltage circuit; the switch module comprises a first relay having a first coil and a normally open contact acting with the first coil; in the second operation state, the normally open contact has two ends and the two ends of the normally open contact of the first relay are electrically connected to the sixth port and the eighth port, respectively, and the first coil is connected to an output terminal of the power supply circuit.

To enable the continuous operation of the LED lamp even after the AC power is cut off, preferably, the emergency module further comprises a booster circuit and a power supply switching circuit for switching power supplies of the first port and the second port, an output terminal of the emergency conversion circuit is electrically connected to an input terminal of the booster circuit, an output terminal of the booster circuit is electrically connected to the power supply switching circuit; in the second operation state, an output terminal of the power supply switching circuit is electrically connected to the first port, the second port, the third port and the fourth port.

To realize the switching of power supply for the light source, preferably, the power supply switching circuit comprises a second relay having a second coil and two contact groups acting with the second coil, each of the two contact groups comprises two stationary contacts and a moving contact, the two stationary contacts of one of the two contact groups are respectively connected to the third port and one output terminal of the booster circuit, and the two stationary contacts in the other contact group are respectively connected to the fourth port and the other output terminal of the booster circuit, and the moving contact in this contact group is connected to the second port, the second coil is connected to the output terminal of the power supply circuit.

To detect the operation state of each circuit in the emergency module, preferably, the emergency module further comprises a controller having a control terminal, and the control terminal of the controller is electrically connected to the charging circuit, the constant voltage circuit, the emergency conversion circuit, the power supply circuit and the booster circuit.

Compared with the prior art, the LED lamp of the present invention has the following advantages. The driving module has the first plug-in terminal, the connector has the second plug-in terminal, and the emergency module has the third plug-in terminal. The second plug-in terminal and the third plug-in terminal can be alternatively engaged with the first plug-in terminal, so that both the connector and the emergency module are capable of driving the light source to operate. Thus, the light source can be powered regardless of whether the AC power is cut off. Moreover, this LED lamp is easy to disassemble or assemble, and there is no need for manual wiring, so that the replacement efficiency of the LED lamp is improved.

### BRIEF DESCRIPTION OF THE DRAWINGS

Fig. 1 is an exploded view of an LED lamp in a first operation state according to an embodiment of the present invention;
Fig. 2 is a perspective view of a connector in Fig. 1;
Fig. 3 is a perspective view of the LED lamp in a second operation state according to the embodiment of the present invention;
Fig. 4 is an exploded view of Fig. 3;
Fig. 5 is a perspective view of an emergency module in Fig. 4;
Fig. 6 is a circuit diagram of a driving module according to the embodiment of the present invention;
Fig. 7 is a circuit diagram of the LED lamp in the first operation state according to the embodiment of the present invention;
Fig. 8 is a circuit diagram of a constant voltage circuit and a switch module in the emergency module according to the embodiment of the present invention;
Fig. 9 is a circuit diagram of a power supply circuit, a controller and a peripheral circuit in the emergency module according to the embodiment of the present invention;
Fig. 10 is a circuit diagram of a booster circuit and a power supply switching circuit in the emergency module according to the embodiment of the present invention; and
Fig. 11 is a circuit diagram of a charging circuit and an emergency conversion circuit in the emergency module according to the embodiment of the present invention.

### DESCRIPTION OF THE EMBODIMENTS

The present invention will be further described below in detail by embodiments with reference to the accompanying drawings.

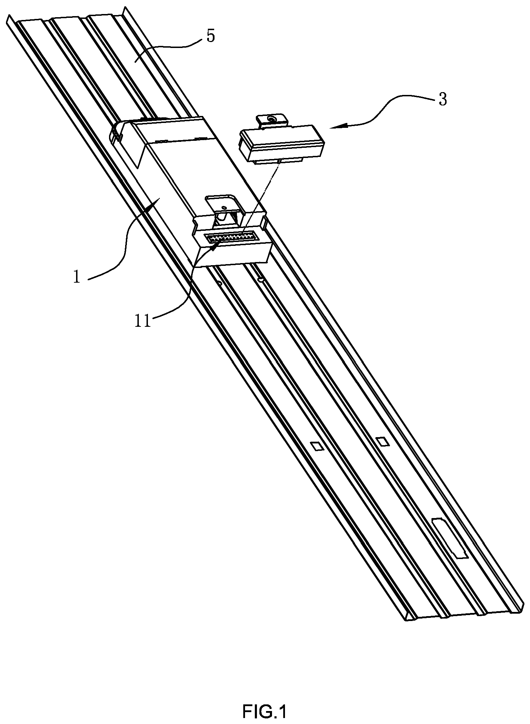

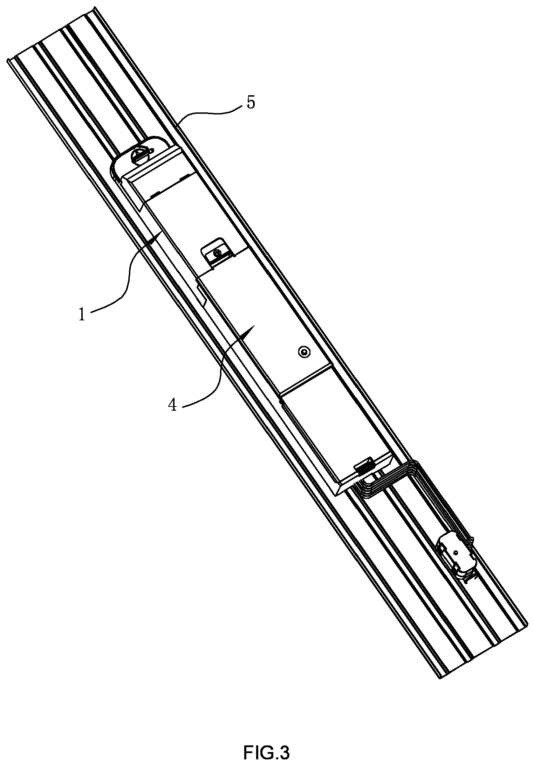

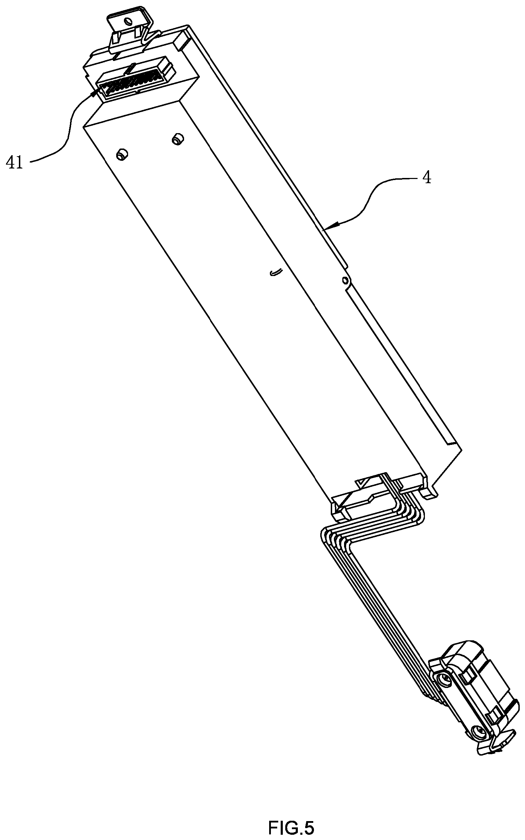

Figs. 1-11 show a preferred embodiment of an LED lamp of the present invention. The LED lamp in this embodiment comprises a lamp holder 5, a light source having an anode and a cathode; a driving module 1 for driving the light source to operate; and a power supply module 2 being electrically connected to the driving module 1 for supplying power to the driving module 1. The power supply module 2 in this embodiment uses AC power, and the light source uses a light-emitting diode (LED). Both the driving module 1 and the emergency module 4 are detachably disposed on the lamp holder 5. Specifically, the driving module 1 and the emergency module 4 may be clamped with the lamp holder 5.

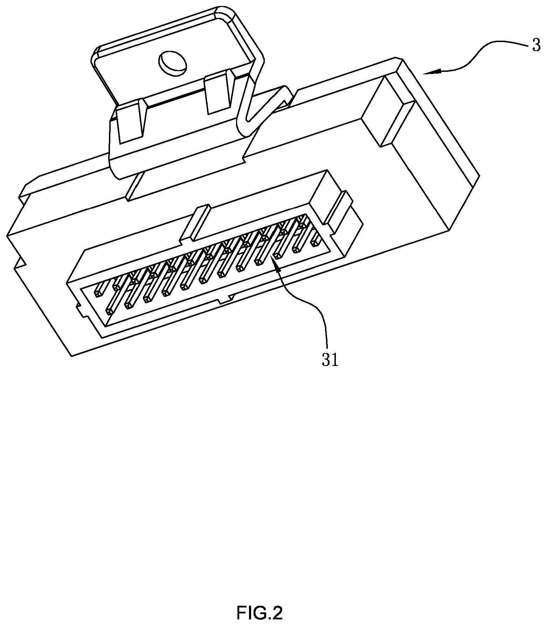

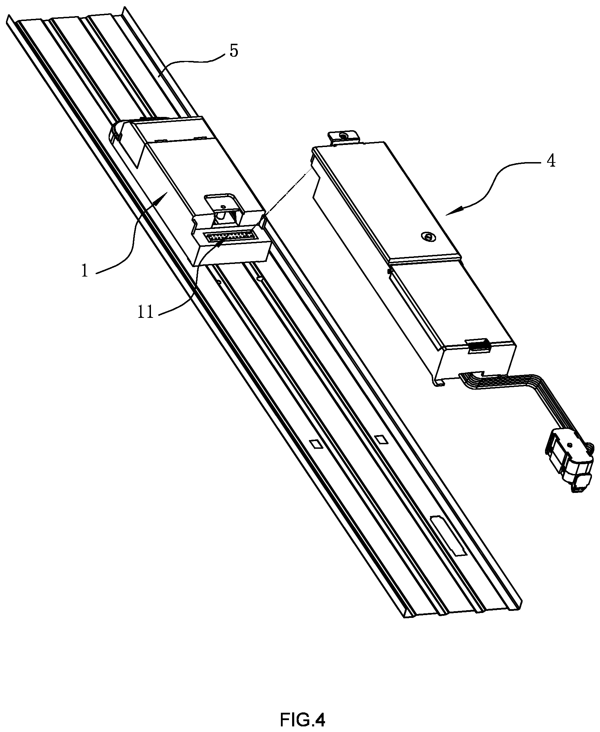

As shown in Figs. 1-5, the LED lamp further comprises a connector 3 and an emergency module 4. The driving module 1 has a first plug-in terminal 11 which is electrically connected to the light source, the connector 3 has a second plug-in terminal 31, and the emergency module 4 has a third plug-in terminal 41. The second plug-in terminal 31 is capable of being buckled with the first plug-in terminal 11, and third plug-in terminal 41 is capable of being buckled with the first plug-in terminal 11. As shown in Figs. 2 and 4, the detail buckled connecting structures between the second plug-in terminal 31 and first plug-in terminal 11, between third plug-in terminal 41 and the first plug-in terminal 11 belong to the prior art and will not be described here.

The connector 3 and the emergency module 4 are capable of being operated alternatively so as to make the LED lamp to have the following two operation states: in a first operation state, the second plug-in terminal 31 of the connector 3 is engaged with the first plug-in terminal 11 of the driving module 1, the connector 3 enables an electrical conduction between the driving module 1 and the light source; in a second operation state, the third plug-in terminal 41 of the emergency module 4 is engaged with the first plug-in terminal 11 of the driving module 1, the emergency module 4 enables an electrical conduction with the light source so as to supply power the driving module.

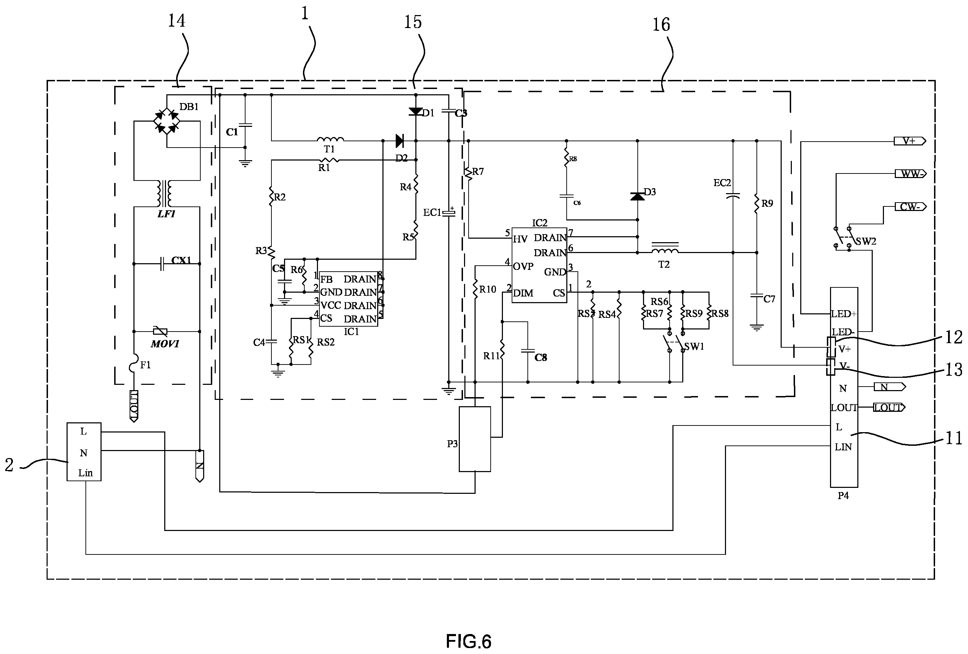

As shown in Fig. 6, in this embodiment, the driving module 1 has a power output anode 12 and a power output cathode 13, the power supply module 2 comprises a neutral wire N, a first live wire L and a second live wire Lin; the first plug-in terminal 11 comprises eight ports, they are a first port LED+, a second port LED-, a third port V+, a fourth port V-, a fifth port N, a sixth port LOUT, a seventh port L and an eighth port LIN, the first port LED+ is connected to the anode of the light source, the second port LED- is connected to the cathode of the light source, the third port V+ is connected to the power output anode 12 of the driving module 1, the fourth port V- is connected to the power output cathode 13 of the driving module 1, the fifth port N is connected to the neutral wire N of the power supply module 2, the sixth port LOUT is connected to an input terminal of the driving module 1, the seventh port L is connected to the first live wire L of the power supply module 2, the eighth port LIN is connected to the second live wire Lin. The light source is not shown in Fig. 6, the port V+ connected to the first port LED+ in FIG. 6 corresponds to the anode of the light source, and the second port LED- is connected with ports WW- and CW- through a shift switch SW2, where both the ports WW- and CW- correspond to the cathode of the light source. The shift switch SW2 is capable of adjusting the color temperature of the light source. The driving module 1 in Fig. 6 comprises a filter circuit 14, a power factor correction (PFC) circuit 15 and an AC-DC conversion circuit 16 which are electrically connected one by one.

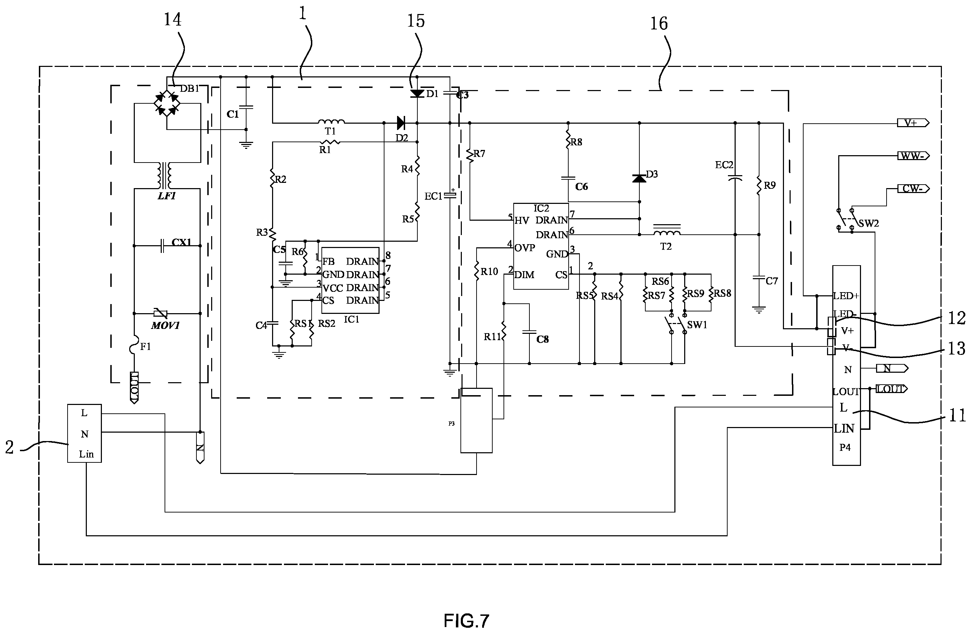

As shown in Fig. 7, in the first operation state, the connector 3 is capable of connecting the first port LED+ to the third port V+, connecting the second port LED- to the fourth port V-, and connecting the sixth port LOUT to the eighth port LIN. Thus, the driving module 1 can be powered by the power supply module 2 (which uses AC power). The power output anode 12 of the driving module 1 is connected to the anode of the light source, and the power output cathode 13 is connected to the cathode of the light source, so that the light source is driven to operate.

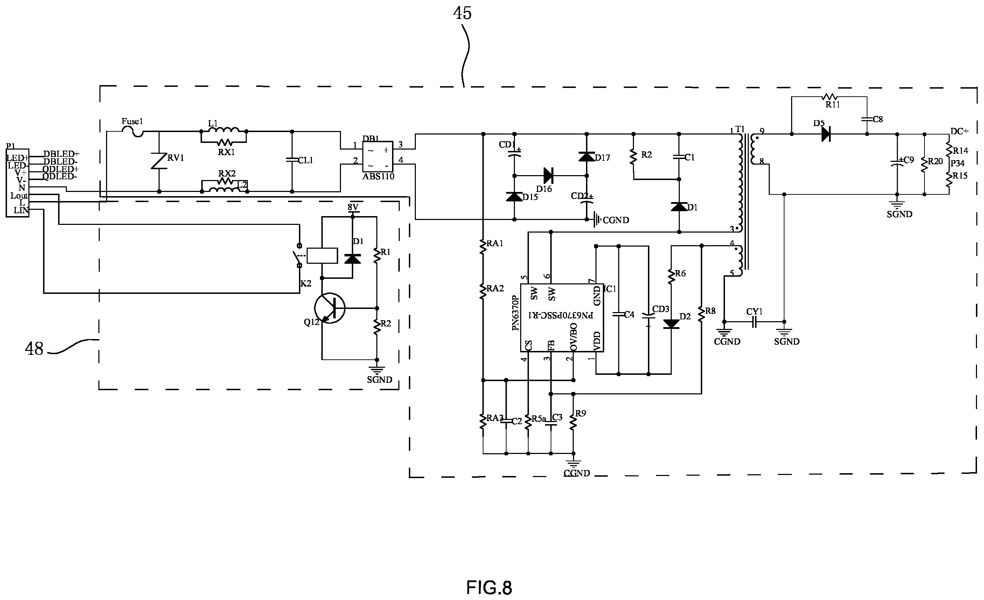

As shown in Figs. 8-11, the emergency module 4 comprises a battery BATT, a charging circuit 44, a constant voltage circuit 45, and an emergency conversion circuit 46, a power supply circuit 47 and a switch module 48, a booster circuit 49, a power supply switching circuit 40 and a controller 4a.

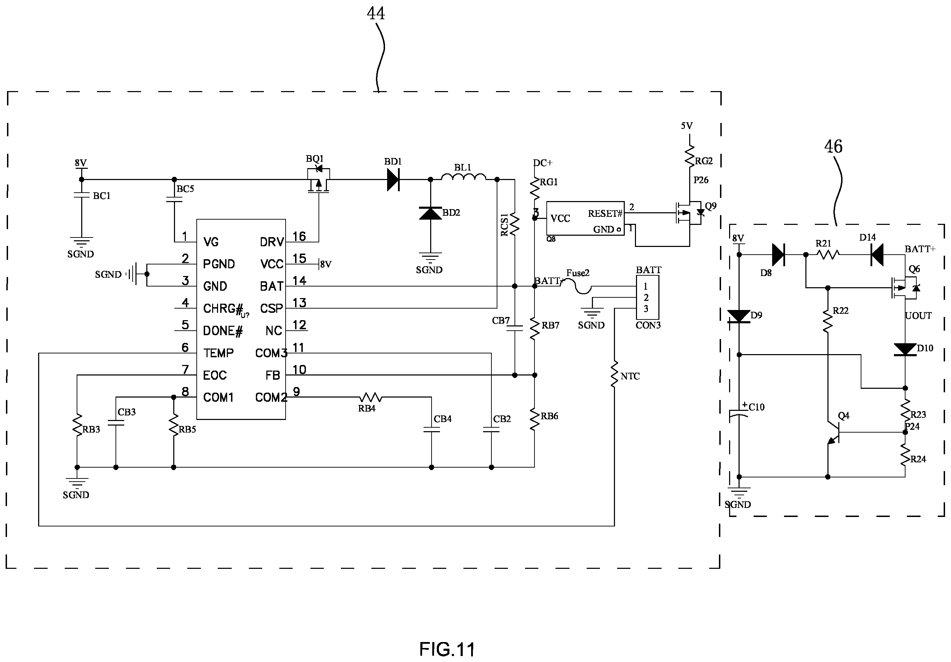

The constant voltage circuit 45 and the switch module 48 are shown in Fig. 8, and the charging circuit 44 and the emergency conversion circuit 46 are shown in Fig. 11. In the second operation state, an input terminal of the constant voltage circuit 45 is respectively electrically connected to the fifth port N and the seventh port L, an output terminal (which corresponds to DC+ in Fig. 8) of the constant voltage circuit 45 is electrically connected to an input terminal of the charging circuit 44, and an output terminal of the charging circuit 44 is electrically connected to the battery BATT, and, an output terminal (which corresponds to BATT+ in Fig. 11) of the battery BATT is electrically connected to an input terminal of the emergency conversion circuit 46. The output terminal of the emergency conversion circuit 46 corresponds to UOUT in Fig. 11.

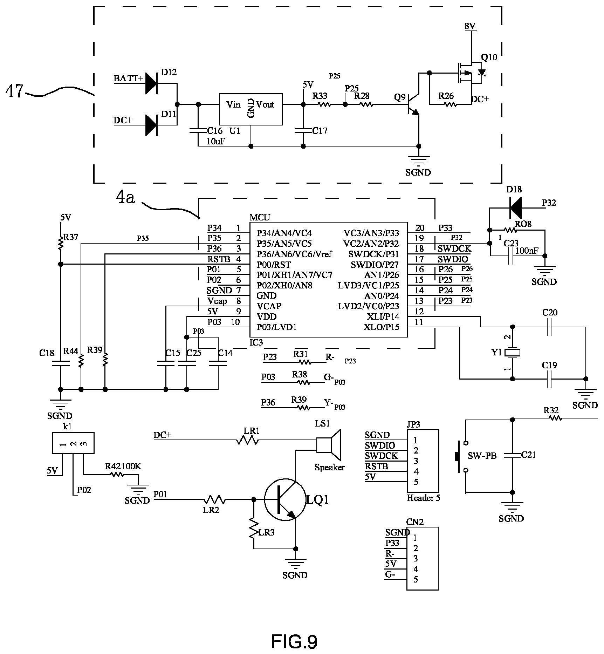

The power supply circuit 47 is shown in Fig. 9. An input terminal of the power supply circuit 47 is electrically connected to the battery BATT and the output terminal of the constant voltage circuit 45. The output terminal of the power supply circuit 47 corresponds to 8V in Fig. 9 (the power supply voltage with other numerical value may also be output by the power supply circuit 17 in this embodiment). The switch module 48 comprises a first relay K2 having a first coil and a normally open contact acting with the first coil. In the second operation state, the normally open contact has two ends and the two ends of the normally open contact of the first relay K2 are electrically connected to the sixth port LOUT and the eighth port LIN, respectively, and the first coil is connected to an output terminal of the power supply circuit 47. Thus, in the second operation state, an electrical conduction is realized between the sixth port LOUT and the eighth port LINK.

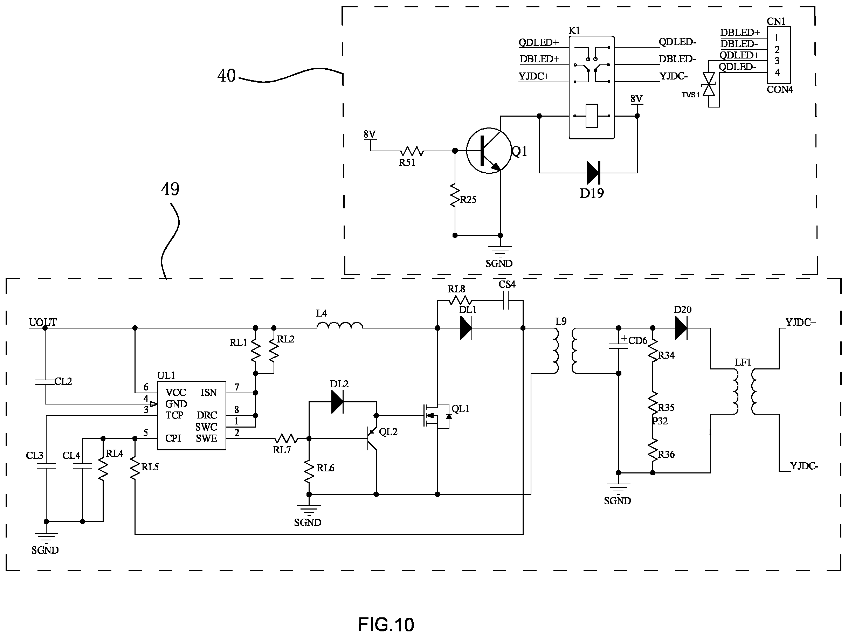

An output terminal of the emergency conversion circuit 46 is electrically connected to an input terminal of the booster circuit 49. The booster circuit 49 is shown in Fig. 10. An output terminal (which corresponds to YJDC+ and YJDC- shown in Fig. 10) of the booster circuit 49 are electrically connected to the power supply switching circuit 40. In this embodiment, the emergency conversion circuit 46 comprises a first switch device (which corresponds to a triode Q4), a second switch device (which corresponds to an MOS transistor Q6, an electrolytic capacitor (C10), and resistors (R21, R22, R23 and R24)). By adjusting the voltage of the voltage division point through the charging and discharging characteristics of the electrolytic capacitor and in combination with the resistors R21, R22, R23 and R24, the on/off of the triode Q4 and the on/off of the MOS transistor Q6 can be controlled, so that the on/off voltage of the battery can be accurately set without MCU control.

In the second operation state, an output terminal of the power supply switching circuit 40 is electrically connected to the first port LED+, the second port LED-, the third port V+ and the fourth port V-. The power supply switching circuit 40 switches power supplies of the first port LED+ and the second port LED-. As shown in Fig. 10, in this embodiment, the power supply switching circuit 40 comprises a second relay K2 having a second coil and two contact groups acting with the second coil, each of the two contact groups comprises two stationary contacts and a moving contact, the two stationary contacts of one of the two contact groups are respectively connected to the third port V+ and one output terminal of the booster circuit 49, and the two stationary contacts in the other contact group are respectively connected to the fourth port V- and the other output terminal of the booster circuit 49, and the moving contact in this contact group is connected to the second port LED-, the second coil is connected to the output terminal of the power supply circuit 47. Thus, when the LED lamp is in the second operation state, the power supply circuit 47 can supply power to the second coil. After the second coil is energized, since there is voltage at the output terminal of the booster circuit 49, the moving contacts of the two contact groups are switched to be connected to the first port LED+ and the second port LED-, so that the emergency module 4 supplies power to the light source, thereby driving the light source to operate.

In this embodiment, the controller 4a uses an MCU, and a control port of the controller 4a is electrically connected to the charging circuit 44, the constant voltage circuit 45, the emergency conversion circuit 46, the power supply circuit 47 and the booster circuit 49. In this embodiment, the 15th port (which corresponds to P25) of the MCU is disposed for emergency state switching, the 1st port (which corresponds to P34) of the MCU is disposed for voltage state detection, and the 19th port (which corresponds to P32) of the MCU is disposed for the detection of a lamp panel. When the lamp panel is inserted between the resistors R35 and R36 of the booster circuit 49, the detection voltage at the 19th port of the MCU is less than 1 V; and, when no lamp panel is inserted between the resistors R35 and R36 of the booster circuit 49, the detection voltage at the 19th port of the MCU is greater than 1.5 V. The 14th port (which corresponds to P24) of the MCU is disposed for starting the test for the first time, and the 16th port (which corresponds to P26) of the MCU is used for the in-situ test of the battery. Of course, the port of the MCU is also connected to a state indication module, which will not be described here.

In this embodiment, the connector 3 can be chosen to be engaged with the driving module 1, at this time, the driving module 1 is powered by the AC power, accordingly the driving module 1 drives the light source to operate. Of course, the emergency module 4 also can be chosen to be engaged with the driving module 1, the emergency module 4 can be used when power is supplied by the AC power, and the battery is charged by the AC power, so that the emergency module 4 drives the light source to operate. In addition, the emergency module 4 can also be switched to supply power to the light source through the battery even after the AC power is cut off.

## Claims

1. An LED lamp, comprising:
a light source having an anode and a cathode;
a driving module (1) for driving the light source to operate;
a power supply module (2) being electrically connected to the driving module (1) for supplying power to the driving module (1);
**characterized in that**: the LED lamp further comprises a connector (3), an emergency module (4);
the driving module (1) has a first plug-in terminal (11) which is electrically connected to the light source, the connector (3) has a second plug-in terminal (31), and the emergency module (4) has a third plug-in terminal (41);
the connector (3) and the emergency module (4) are capable of being operated alternatively so as to make the LED lamp to have the following two operation states:
in a first operation state, the second plug-in terminal (31) of the connector (3) is engaged with the first plug-in terminal (11) of the driving module (1), the connector (3) enables an electrical conduction between the driving module (1) and the light source;
in a second operation state, the third plug-in terminal (41) of the emergency module (4) is engaged with the first plug-in terminal (11) of the driving module (1), the emergency module (4) enables an electrical conduction with the light source so as to drive the light source to operate.

2. The LED lamp according to claim 1, **characterized in that**, the second plug-in terminal (31) is capable of being buckled with the first plug-in terminal (11), and third plug-in terminal (41) is capable of being buckled with the first plug-in terminal (11).

3. The LED lamp according to claim 1, **characterized in that**, further comprises a lamp holder (5), the driving module (1) and the emergency module (4) are detachably disposed on the lamp holder (5).

4. The LED lamp according to anyone of claims 1-3, **characterized in that**, the driving module (1) has a power output anode (12) and a power output cathode (13), the power supply module (2) comprises a neutral wire (N), a first live wire (L) and a second live wire (Lin);
the first plug-in terminal (11) comprises eight ports, they are a first port (LED+), a second port (LED-), a third port (V+), a fourth port (V-), a fifth port (N), a sixth port (LOUT), a seventh port (L) and an eighth port (LIN), the first port (LED+) is connected to the anode of the light source, the second port (LED-) is connected to the cathode of the light source, the third port (V+) is connected to the power output anode (12) of the driving module (1), the fourth port (V-) is connected to the power output cathode (13) of the driving module (1), the fifth port (N) is connected to the neutral wire (N) of the power supply module (2), the sixth port (LOUT) is connected to an input terminal of the driving module (1), the seventh port (L) is connected to the first live wire (L) of the power supply module (2), the eighth port (LIN) is connected to the second live wire (Lin).

5. The LED lamp according to claim 4, **characterized in that**, in the first operation state, the connector (3) is capable of connecting the first port (LED+) to the third port (V+), connecting the second port (LED-) to the fourth port (V-), and connecting the sixth port (LOUT) to the eighth port (LIN).

6. The LED lamp according to claim 4, **characterized in that**, the emergency module (4) comprises a battery (BATT), a charging circuit (44), a constant voltage circuit (45), and an emergency conversion circuit (46);
in the second operation state, an input terminal of the constant voltage circuit (45) is respectively electrically connected to the fifth port (N) and the seventh port (L), an output terminal of the constant voltage circuit (45) is electrically connected to an input terminal of the charging circuit (44), and an output terminal of the charging circuit (44) is electrically connected to the battery (BATT), and, the battery (BATT) is electrically connected to an input terminal of the emergency conversion circuit (46).

7. The LED lamp according to claim 6, **characterized in that**, the emergency module (4) further comprises a power supply circuit (47) and a switch module (48), an input terminal of the power supply circuit (47) is electrically connected to the battery (BATT) and the output terminal of the constant voltage circuit (45);
the switch module (48) comprises a first relay (K2) having a first coil and a normally open contact acting with the first coil;
in the second operation state, the normally open contact has two ends and the two ends of the normally open contact of the first relay (K2) are electrically connected to the sixth port (LOUT) and the eighth port (LIN), respectively, and the first coil is connected to an output terminal of the power supply circuit (47).

8. The LED lamp according to claim 7, **characterized in that**, the emergency module (4) further comprises a booster circuit (49) and a power supply switching circuit (40) for switching power supplies of the first port (LED+) and the second port (LED-), an output terminal of the emergency conversion circuit (46) is electrically connected to an input terminal of the booster circuit (49), output terminals of the booster circuit (49) is electrically connected to the power supply switching circuit (40);
in the second operation state, an output terminal of the power supply switching circuit (40) is electrically connected to the first port (LED+), the second port (LED-), the third port (V+) and the fourth port (V-).

9. The LED lamp according to claim 8, **characterized in that**, the power supply switching circuit (40) comprises a second relay (K2) having a second coil and two contact groups acting with the second coil, each of the two contact groups comprises two stationary contacts and a moving contact, the two stationary contacts of one of the two contact groups are respectively connected to the third port (V+) and one output terminal of the booster circuit (49), and the two stationary contacts in the other contact group are respectively connected to the fourth port (V-) and the other output terminal of the booster circuit (49), and the moving contact in this contact group is connected to the second port (LED-), the second coil is connected to the output terminal of the power supply circuit (47).

10. The LED lamp according to claim 8, **characterized in that**, the emergency module (4) further comprises a controller (4a) having a control terminal, and the control terminal of the controller (4a) is electrically connected to the charging circuit (44), the constant voltage circuit (45), the emergency conversion circuit (46), the power supply circuit (47) and the booster circuit (49).
